(19) **Europäisches Patentamt** / **European Patent Office** / **Office européen des brevets**

(11) **EP 3 023 926 B1**

(12) **FASCICULE DE BREVET EUROPEEN**

(45) Date de publication et mention de la délivrance du brevet:
**03.01.2018 Bulletin 2018/01**

(51) Int Cl.:
*H04L 9/32* (2006.01)     *G06F 21/34* (2013.01)
*G06K 19/073* (2006.01)   *G06K 19/077* (2006.01)
*G06Q 20/34* (2012.01)    *G06Q 20/38* (2012.01)
*G07F 7/08* (2006.01)

(21) Numéro de dépôt: **15195725.5**

(22) Date de dépôt: **20.11.2015**

(54) **PROCÉDÉ DE GÉNÉRATION ET D'AFFICHAGE D'UN CRYPTOGRAMME POUR UNE CARTE DE PAIEMENT, CARTE DE PAIEMENT**

VERFAHREN ZUR ERSTELLUNG UND ANZEIGE EINES KRYPTOGRAMMS FÜR EINE ZAHLUNGSKARTE, UND ENTSPRECHENDE ZAHLUNGSKARTE

METHOD FOR GENERATING AND DISPLAYING A CRYPTOGRAM FOR A PAYMENT CARD, PAYMENT CARD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **21.11.2014 FR 1461296**

(43) Date de publication de la demande:
**25.05.2016 Bulletin 2016/21**

(73) Titulaire: **CB Investissements 75001 Paris (FR)**

(72) Inventeur: **GAUTIER, Serge 75011 Paris (FR)**

(74) Mandataire: **Cabinet Plasseraud 66, rue de la Chaussée d'Antin 75440 Paris Cedex 09 (FR)**

(56) Documents cités:
**EP-A2- 0 234 100      US-A1- 2003 105 964
US-A1- 2007 136 211    US-A1- 2012 260 324**

**Description**

L'invention concerne une carte de paiement munie d'un dispositif d'affichage pour l'affichage d'un cryptogramme pour des opérations de vérification de carte disposé sur une face de la carte de paiement ainsi qu'un procédé de génération et d'affichage d'un cryptogramme pour une telle carte de paiement.

L'invention concerne notamment le domaine des cartes bancaires de paiement, par exemple de type EMV (Europay, Mastercard, Visa) ou autre.

Une transaction à distance avec une telle carte de paiement, par exemple par internet, courrier, fax ou téléphone, implique usuellement de fournir un numéro de compte primaire PAN inscrit sur une face de la carte de paiement ainsi que certaines informations additionnelles comme la date d'expiration de la carte de paiement et/ou l'identité du titulaire inscrite sur la carte.

Afin de sécuriser la transaction à distance, il est en outre usuellement nécessaire de fournir un cryptogramme appelé également valeur de vérification de la carte ou « CVx2 » qui est utilisé par le serveur pour des opérations de vérification de carte. Le cryptogramme est usuellement composé de 3 ou 4 chiffres inscrits sur la carte de paiement, notamment sur la face de la carte qui est opposée à la face portant le numéro de compte primaire PAN.

Les chiffres composant le cryptogramme sont par exemple déterminés en chiffrant le numéro de compte primaire PAN de la carte, sa date d'expiration ainsi qu'un code de service de la carte, par une clé numérique unique associée à la carte de paiement, et en conservant 3 ou 4 chiffres du résultat obtenu.

Dans ce contexte, il est souhaitable d'empêcher la collecte et/ou la réutilisation de cryptogrammes par des agents ou personnes illégitimes qui auraient eu accès aux informations de la carte de paiement et en auraient enregistré le numéro de compte primaire PAN, les données additionnelles et la valeur du cryptogramme.

A cette fin, il a été proposé des cartes de paiement munies d'un dispositif d'affichage d'une valeur du cryptogramme, disposé sur une face de la carte de paiement, dans lesquelles la valeur du cryptogramme est rafraichie périodiquement afin d'empêcher ou de limiter la réutilisation du cryptogramme par des personnes illégitimes.

Le document US 7,954,705 présente un exemple d'une telle carte de paiement et d'un procédé de génération et d'affichage d'un cryptogramme pour cette carte de paiement.

Les documents US 2007/136211 A1 et US 2003105964 A1 décrivent des procédés selon le préambule de la revendication 1.

Il est cependant souhaitable d'améliorer encore la sécurité de telles cartes de paiement, en particulier de sorte à prévenir ou limiter les possibilités de mettre en oeuvre une rétro-ingénierie de la carte de paiement.

L'invention propose un procédé de génération et d'affichage d'un cryptogramme pour une carte de paiement comportant un dispositif d'affichage disposé sur une face de la carte de paiement, le dispositif d'affichage comprenant un champ pour l'affichage d'un cryptogramme pour des opérations de vérification de carte réalisées par un serveur de vérification de carte, le procédé comportant les opérations de :

- afficher, dans le champ du dispositif d'affichage, une première valeur du cryptogramme pendant une première période de temps,
- afficher, dans le champ du dispositif d'affichage, une deuxième valeur du cryptogramme pendant une deuxième période de temps suivant la première période de temps, les première et deuxième périodes de temps ayant des durées différentes.

Le cryptogramme est ainsi affiché sur la carte par une encre électronique ou autre type d'affichage et rafraîchi à des intervalles de temps calculés. Le porteur utilise la valeur courante du cryptogramme de la même façon qu'un cryptogramme permanent non modifiable tel qu'il est communément utilisé aujourd'hui.

Le gain en sécurité provient de l'expiration rapide des numéros capturés qui doit donc être avantageusement assez rapide pour ne pas permettre une utilisation importante de la carte et assez lente pour permettre à un utilisateur de saisir le cryptogramme aisément.

En particulier, si l'utilisateur lit une première valeur du cryptogramme sur la carte puis la transmet au serveur de vérification de carte alors que l'afficheur de la carte a déjà basculé sur une deuxième valeur du cryptogramme, la vérification de la carte peut échouer.

Pour réduire la gêne qui peut alors être ressentie par l'utilisateur de la carte, il peut être prévu d'accepter, dans une plage de temps définie autour de l'instant de changement de valeur, deux valeurs pour le cryptogramme, ces deux valeurs étant en particulier la première valeur et la seconde valeur qui se succèdent alors temporellement.

De ce fait, ladite plage de temps autour de l'instant de changement de valeur du cryptogramme est une période de temps au cours de laquelle la probabilité de générer aléatoirement un cryptogramme accepté est deux fois plus élevée qu'hors de cette plage de temps. Le procédé de génération et d'affichage d'un cryptogramme selon l'invention rend cette plage de temps plus difficile à identifier par rétro-ingénierie puisque les instants de changement de valeur du cryptogramme ne se succèdent pas périodiquement.

Dans un mode de réalisation, une opération de basculement de la première période de temps à la deuxième période de temps est réalisée lorsqu'un compteur temporel dépasse une première valeur de seuil de basculement associée à la première période de temps, le compteur temporel étant incrémenté par une horloge interne de la carte de paiement non-synchronisée avec le serveur de vérification de carte.

De cette manière, il n'est pas possible d'avoir accès à des informations de synchronisation indiquant le basculement de la carte en interceptant les échanges entre la carte et le serveur de vérification.

Ceci permet de renforcer la sécurité du cryptogramme.

De préférence, l'opération de basculement de la première période de temps à la deuxième période de temps comporte les étapes de :

- incrémenter un compteur de valeurs du cryptogramme affichées,
- déterminer la deuxième valeur du cryptogramme à afficher pendant la deuxième période de temps en fonction, au moins, d'une clé numérique unique associée à la carte de paiement et du compteur de valeurs du cryptogramme affichées,
- mettre à jour le dispositif d'affichage de la carte pour afficher la deuxième valeur du cryptogramme, et
- déterminer une deuxième valeur de seuil de basculement associée à la deuxième période de temps, en fonction au moins du compteur de valeurs du cryptogramme affichées.

Dans un mode de réalisation avantageux, les valeurs du cryptogramme affichées dans le champ du dispositif d'affichage ne comportent pas de données de synchronisation pour le serveur de vérification de carte.

Dans un mode de réalisation particulier, le procédé comporte une pluralité d'opérations d'affichage successives,

chaque opération d'affichage de la pluralité d'opérations d'affichage comportant l'affichage, dans le champ du dispositif d'affichage, d'une valeur du cryptogramme associée à ladite opération d'affichage pendant une période de temps associée à ladite opération d'affichage,

et les périodes de temps successives associées aux opérations d'affichage successives de la pluralité d'opérations d'affichage forment une série non-constante calculable.

De préférence, une valeur de seuil de basculement associée à une période de temps est déterminée en fonction du compteur de valeurs du cryptogramme affichées, d'une valeur moyenne de période de temps entre deux basculements, d'une plage de variabilité unique associée à la carte de paiement et d'une valeur temporelle de début de fonctionnement de la carte.

Un autre aspect de la présente invention se rapporte à une carte de paiement comportant

- un dispositif d'affichage disposé sur une face de la carte de paiement comprenant un champ pour l'affichage d'un cryptogramme pour des opérations de vérification de carte réalisées par un serveur de vérification de carte, et
- un circuit de commande agencé pour commander l'affichage, dans ledit champ du dispositif d'affichage, au moins d'une première valeur du cryptogramme pendant une première période de temps et d'une deuxième valeur du cryptogramme pendant une deuxième période de temps suivant la première période de temps, les première et deuxième périodes de temps ayant des durées différentes.

Dans un mode de réalisation particulier, le circuit de commande comporte :

* une mémoire pour contenir un compteur temporel et au moins une valeur de seuil de basculement,
* une horloge interne non-synchronisée avec l'extérieur de la carte, pour incrémenter un compteur temporel, et
* un circuit de contrôle pour basculer de la première période de temps à la deuxième période de temps lorsque le compteur temporel dépasse une première valeur de seuil de basculement associée à la première période de temps.

Dans ce cas, la carte de paiement comporte avantageusement en outre un numéro de compte primaire PAN inscrit sur une face de la carte de paiement.

Un autre aspect de la présente invention se rapporte à un programme d'ordinateur pour une carte de paiement, le programme comprenant des instructions pour mettre en oeuvre les étapes d'un procédé de génération et d'affichage d'un cryptogramme pour des opérations de vérification de carte telles que décrites ci-avant.

D'autres particularités et avantages de la présente invention apparaîtront dans la description ci-après d'exemples de réalisation non limitatifs, en référence aux dessins annexés, dans lesquels :

- la figure 1 est un schéma synoptique d'un système de vérification de carte de paiement comprenant une carte de paiement selon l'invention, ainsi qu'un serveur de vérification de carte et une entité réceptrice ;

- la figure 2 est un schéma synoptique détaillé de la carte de paiement de la figure 1;

- la figure 3 est un organigramme d'opérations de génération et d'affichage d'un cryptogramme pour une carte de paiement telle que celle des figures 1 et 2;

- la figure 4 est un organigramme détaillé d'une opération de basculement telle que réalisée au cours d'un procédé de génération et d'affichage d'un cryptogramme selon l'invention.

L'invention est décrite ci-après dans son application non limitative aux transactions à distance avec une carte de type EMV (Europay, Mastercard, Visa).

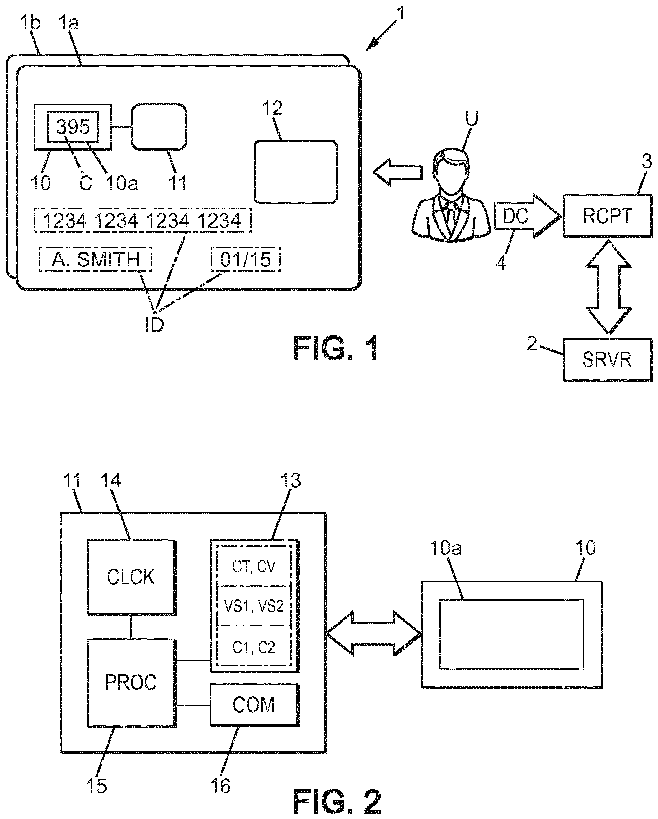

L'entité 1 représentée sur la figure 1 est une carte de paiement 1, par exemple une carte de type EMV (Europay, Mastercard, Visa).

L'entité 2 est un serveur de vérification de carte qui comporte au moins une unité d'entrée 20 de données de carte et une unité de traitement 21.

L'entité 3 est une entité réceptrice 3 avec laquelle un utilisateur U de la carte de paiement 1 peut communiquer par un canal de communication 4, par exemple par internet, courrier, fax ou téléphone, lors d'une transaction à distance avec une carte de paiement.

L'entité réceptrice 3 peut ainsi être par exemple un serveur d'un site internet marchand ou d'un site internet de paiement en ligne ou encore un opérateur recevant une demande de transaction par courrier, fax ou téléphone. L'entité réceptrice 3 est donc apte à recevoir, par des canaux de communication 4 divers, des données de carte DC d'un utilisateur U de la carte et de paiement 1. L'entité réceptrice 3 est en outre apte à les transmettre au serveur 2 de vérification de carte par un deuxième canal de communication 5, par exemple par l'intermédiaire d'un réseau tel qu'internet, un réseau intranet ou encore une liaison point à point filaire ou sans fil.

L'entité réceptrice 3 assure ainsi la médiation entre l'utilisateur U de la carte de paiement 1, et le serveur 2 de vérification de la carte.

Les données de carte DC comportent notamment une valeur de cryptogramme C à tester de la carte de paiement 1, ainsi que des informations d'identification ID de ladite carte de paiement, par exemple un numéro de compte primaire PAN de la carte de paiement, une date d'expiration de la carte de paiement et/ou une l'identité du titulaire de la carte de paiement.

Le serveur de vérification de carte 2 est apte et destiné à mettre en oeuvre des opérations de vérification de carte qui comportent notamment :

- Une opération de réception, par l'unité d'entrée 20, de données de carte.
- Une opération de détermination, au moyen de l'unité de traitement 21, d'une valeur de cryptogramme acceptable. La valeur de cryptogramme acceptable peut en particulier être déterminée à partir des informations d'identification comprises dans les données de carte, par exemple à partir d'un numéro de compte primaire PAN, d'une date d'expiration de la carte de paiement et/ou d'une l'identité du titulaire de la carte de paiement. La valeur de cryptogramme acceptable est notamment déterminée sans utiliser la valeur de cryptogramme à tester comprise dans les données de carte.
- Une opération de comparaison entre la valeur de cryptogramme à tester et la valeur de cryptogramme acceptable pour déterminer si les données de carte sont acceptées.

Au cours de l'opération de détermination d'une valeur de cryptogramme acceptable, le serveur de vérification de carte 2 peut aller chercher dans une base de données 3 des informations additionnelles sur la carte de paiement. Ces informations additionnelles peuvent être, par exemple, des valeurs graines pour un algorithme de calcul de valeurs de cryptogramme comme détaillé ci-après. La détermination de la valeur de cryptogramme acceptable est alors réalisée sur la base des informations d'identification comprises dans les données de carte ainsi que des informations additionnelles obtenues à partir de la base de données 3.

Ladite base de données 3 peut associer lesdites informations additionnelles à des informations d'identification de carte de paiement, par exemple des numéros de compte primaire PAN, de sorte à permettre un accès aisé auxdites informations additionnelles.

Les opérations de vérification de carte peuvent bien évidemment comporter des opérations additionnelles non mentionnées ici, par exemple une vérification des informations d'identification de carte de paiement, par exemple une vérification du numéro de compte primaire PAN de la carte de paiement, de la date d'expiration de la carte de paiement et/ou de l'identité du titulaire de la carte de paiement.

Les opérations de vérification de carte permettent, de manière générale, de conclure, dans la mesure du possible, quant à la réalité de la possession de la carte de paiement par l'utilisateur U demandant la transaction à distance.

La carte de paiement 1 est une carte de format connu, par exemple telle que définie dans les normes ISO 7810 ID-1, ISO 7813, c'est-à-dire présentant par exemple une forme générale de feuille semi-rigide aisément transportable, d'une épaisseur par exemple de l'ordre de quelques millimètres, et de quelques centimètres de côté, par exemple constituée pour partie de matière plastique.

Elle comporte deux faces opposées 1a et 1b. L'une au moins de ces faces 1b peut présenter un certain nombre d'informations, notamment des informations d'identification de carte de paiement ID, telles qu'un numéro de compte primaire PAN de la carte de paiement, une date d'expiration de la carte de paiement et/ou une l'identité du titulaire de la carte de paiement.

Par ailleurs, la carte de paiement 1 comporte un dispositif d'affichage 10.

Le dispositif d'affichage 10 est disposé sur une face 1a de la carte de paiement 1. Le dispositif d'affichage 10 comprend un champ 10a pour l'affichage d'un cryptogramme. Le dispositif d'affichage 10 est notamment disposé sur une face 1a de la carte de sorte à ce que le champ 10a puisse être visible par un utilisateur de la carte de paiement 1.

Le dispositif d'affichage 10 peut être disposé sur la même face que certaines des informations d'identification de carte de paiement. Le dispositif d'affichage 10 peut également être disposé une face 1a tandis que les informations d'identification de carte de paiement sont disposées sur la face 1b opposée, de sorte qu'il ne soit pas possible de voir en même temps le cryptogramme et les informations d'identification de carte de paiement. Ceci réduit le risque de fraude.

Dans un mode de réalisation permettant la réutilisation des canaux de communication existants, les valeurs du cryptogramme affichées dans le champ 10a du dispositif d'affichage 10 comportent chacune 3 ou 4 chiffres.

La carte de paiement 1 comporte également un circuit de commande 11, agencé pour commander l'affichage 200, dans le champ 10a du dispositif d'affichage 10 d'une valeur de cryptogramme qui peut être utilisée pour des opérations de vérification de carte réalisées par un serveur de vérification de carte, telles que décrites ci-avant.

Ainsi, lors d'une transaction à distance avec une telle carte de paiement 1, par exemple par internet, courrier, fax ou téléphone, l'utilisateur U de la carte peut lire, sur la carte de paiement 1, les données de carte telles que détaillées ci-avant, c'est-à-dire comportant par exemple la valeur de cryptogramme à tester, le numéro de compte primaire PAN de la carte de paiement, la date d'expiration de la carte de paiement et/ou l'identité du titulaire de la carte de paiement, et fournir ces données de carte à l'entité réceptrice 3 par le canal approprié (selon le mode de réalisation : entrée des données dans les champs d'une page internet ou d'un programme d'ordinateur, communication écrite ou orale par lettre, fax ou téléphone) qui les transmet au serveur 2 de vérification de carte pour déterminer si les données de carte sont acceptées et si la transaction peut être autorisée.

Dans un mode de réalisation, l'entité réceptrice 3 peut être directement le serveur 2 de vérification de carte.

La carte de paiement 1 peut également comporter une puce 10 apte à communiquer électriquement ou sans contact avec un terminal, en particulier un terminal de paiement, pour réaliser par exemple des opérations de paiement direct telles qu'elles sont pratiquées avec les cartes de paiement actuelles. Le circuit de commande 11 peut être intégré à la puce 12 ou être un circuit physiquement séparé de ladite puce 12.

Bien évidemment, dans de telles opérations de paiement direct, l'opérateur de la carte et le marchand (machine marchande ou personne humaine) sont en présence physique, et en proximité, l'un de l'autre. Le marchand est donc usuellement en mesure de confirmer de visu ou par contact ou détection, la réalité de la possession de la carte de paiement par l'utilisateur demandant la transaction. L'invention s'intéresse au cas des transactions à distance dans lequel cette présence physique n'est usuellement pas vérifiée.

Plus précisément, le circuit de commande 11 est agencé pour commander l'affichage 200, dans le champ 10a du dispositif d'affichage 10, au moins d'une première valeur du cryptogramme C1 pendant une première période de temps T1 et d'une deuxième valeur du cryptogramme C2 pendant une deuxième période de temps T2 suivant la première période de temps T1.

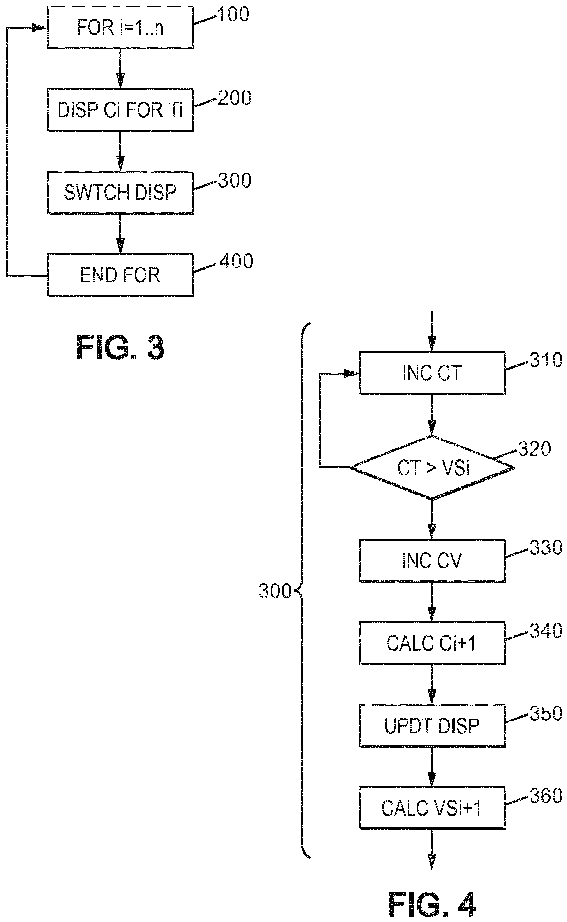

La figure 3 illustre un exemple de réalisation d'un tel procédé dans lequel une boucle 100, 200, 300, 400 permet l'affichage successif des différentes valeurs du cryptogramme. Une opération de basculement 300 permet de passer de l'affichage d'une valeur du cryptogramme à l'affichage d'une autre valeur du cryptogramme.

Par ailleurs, le schéma fonctionnel présenté sur la figure 3 est un exemple typique d'un programme dont certaines instructions peuvent être réalisées auprès de l'équipement décrit. A ce titre, la figure 3 peut correspondre à l'organigramme de l'algorithme général d'un programme informatique au sens de l'invention.

On comprend bien qu'à un instant donné le champ 10a affiche une unique valeur de cryptogramme parmi les valeurs C1 et C2. Cette unique valeur affichée est toutefois apte à changer au cours du temps. Dans un mode de réalisation de l'invention, le champs 10a est en particulier uniquement apte à afficher une seule valeur de cryptogramme à un instant donné et n'est pas apte à afficher simultanément plusieurs valeurs de cryptogramme. De cette façon, les dimensions et la consommation électrique du dispositif d'affichage 10 sont réduites.

A cette fin, le circuit de commande 11 peut en particulier comporter une mémoire 13 et une horloge interne 14.

La mémoire 13 est apte à contenir un compteur temporel CT et au moins une valeur de seuil de basculement VS1.

L'horloge interne 14 est apte à incrémenter ledit compteur temporel CT à des intervalles de temps réguliers. Avantageusement, l'horloge interne 14 est non-synchronisée avec l'extérieur de la carte de paiement 1, notamment non-synchronisée avec le serveur 2 de vérification de carte. De cette façon, il est rendu plus difficile de prévoir l'instant de basculement entre les différentes valeurs de cryptogramme et le risque de fraude est réduit.

A cette fin par exemple, les valeurs du cryptogramme affichées dans le champ 10a du dispositif d'affichage 10 ne comportent pas de données de synchronisation.

Le circuit de commande 11 peut en outre comporter un circuit de contrôle 15 et un circuit de communication 16 avec le dispositif d'affichage 10.

Le circuit de contrôle 15 peut communiquer avec l'horloge interne 14, la mémoire 13 et le circuit de communication 16.

Dans un mode de réalisation particulier de l'invention, le circuit de commande 11 peut être intégré au dispositif d'affichage 10.

Dans un autre mode de réalisation, le circuit de commande 11 et le dispositif d'affichage 10 peuvent être physiquement séparés et former deux puces distinctes.

Le circuit de commande 11 et/ou le circuit de contrôle 15 peuvent être, par exemple :

- un processeur apte à interpréter des instructions sous la forme de programme informatique, ou
- une puce électronique, notamment une puce électronique dont les étapes du procédé de l'invention sont décrites dans le silicium, ou encore

- une puce électronique programmable.

La figure 4 détaille plus précisément les sous-étapes qui peuvent être comprises dans l'opération de basculement 300.

Ainsi, comme cela est visible sur les figures 3 et 4, le circuit de contrôle 15 est notamment apte à mettre en oeuvre au moins une opération de basculement 300 de la première période de temps T1 à la deuxième période de temps T2. Cette opération de basculement 300 peut en particulier être mise en oeuvre lorsque le compteur temporel CT dépasse une valeur de seuil de basculement VS1. La valeur de seuil de basculement VS1 peut notamment être une première valeur de seuil de basculement VS1 associée à la première période de temps T1.

Par exemple, le compteur temporel CT est incrémenté régulièrement 310 par l'horloge interne 14 du circuit de commande 11 et, lorsque ledit compteur temporel CT dépasse une valeur seuil définie pour chaque période de temps 320, une nouvelle valeur du cryptogramme est affichée 350 dans le champ 10a du dispositif d'affichage 10. Dans un mode de réalisation, le compteur temporel CT peut alors être remis à zéro ou bien on peut déterminer une nouvelle valeur seuil en tenant compte de la valeur déjà existante dans le compteur temporel CT.

Plus précisément, l'opération de basculement de la première période de temps T1 à la deuxième période de temps T2 peut comporter au moins les étapes de :

- incrémenter 330 un compteur de valeurs du cryptogramme affichées CV, qui comporte donc dans ce cas l'index i de la deuxième période de temps, c'est-à-dire la valeur 2,
- déterminer 340 la deuxième valeur du cryptogramme C2 à afficher pendant la deuxième période de temps T2 en fonction, au moins, d'une clé numérique unique M associée à la carte de paiement 1 et du compteur de valeurs du cryptogramme affichées CV,
- mettre à jour 350 le dispositif d'affichage 10 de la carte pour afficher la deuxième valeur du cryptogramme C2, et
- déterminer 360 une deuxième valeur de seuil de basculement VS2 associée à la deuxième période de temps T2, en fonction au moins du compteur de valeurs du cryptogramme affichées CV.

On voit qu'un tel algorithme permet aisément d'avoir des première et deuxième périodes de temps T1, T2 de durées différentes.

Dans un exemple de réalisation, le compteur temporel CT pourra être remis à zéro au cours d'une étape additionnelle de l'opération de basculement.

Par ailleurs, ces étapes 310, 320, 330, 340, 350, 360 peuvent être notamment réalisées successivement dans l'ordre énoncé ci-dessus. Dans une variante possible de l'invention, les étapes mentionnées ci-dessus pourront être réalisées dans un ordre différent de celui indiqué ou même en parallèle pour certaine ou l'ensemble de ces étapes.

Enfin, les différentes valeurs du cryptogramme peuvent être déterminées par tout procédé de calcul permettant d'obtenir des valeurs successives calculables, ledit procédé de calcul étant avantageusement difficile ou impossible à inverser. Ainsi par exemple, on peut mettre en oeuvre un algorithme similaire aux algorithmes connus de calcul de cryptogrammes, tels par exemple que ceux définis dans les spécifications EMV (Europay, Mastercard, Visa).

Un tel algorithme calcule une valeur de cryptogramme en fonction notamment d'une clé numérique unique M associée à la carte de paiement 1 ainsi que, éventuellement, de données de carte telles que détaillées ci-avant, c'est-à-dire par exemple la valeur de cryptogramme à tester, le numéro de compte primaire PAN de la carte de paiement, la date d'expiration de la carte de paiement et/ou l'identité du titulaire de la carte de paiement.

Pour obtenir des valeurs successives de cryptogramme il suffit alors de prendre par exemple en compte le compteur de valeurs du cryptogramme affichées CV. Pour cela, on peut notamment remplacer une partie des valeurs d'entrées dudit algorithme par la valeur du compteur de valeurs du cryptogramme affichées CV, par exemple une portion de ladite clé numérique unique M associée à la carte de paiement 1, ou une portion desdites données de carte.

Cet exemple de procédé de calcul du cryptogramme est bien évidemment fourni à titre indicatif et non limitatif et des variantes de calcul d'une telle série de valeurs successives de cryptogramme sont bien évidemment envisageables.

On comprend que le procédé est particulièrement adapté au cas où il comporte une pluralité de n opérations d'affichage 200 successives, comme illustré sur la figure 3.

Dans ce cas, chaque opération d'affichage i de la pluralité d'opérations d'affichage comporte alors l'affichage, dans le champ 10a du dispositif d'affichage 10, d'une valeur du cryptogramme Ci associée à ladite opération d'affichage i pendant une période de temps Ti également associée à ladite opération d'affichage i.

Dans ce cas bien évidemment, le compteur de valeurs du cryptogramme affichées CV comportera par exemple successivement chaque valeur de l'index i des périodes de temps, c'est-à-dire successivement les valeurs allant de 1 à n.

Le compteur de valeurs du cryptogramme affichées CV permet donc de mémoriser l'index i de la valeur du cryptogramme actuellement affichée. Pour simplifier la compréhension de l'invention, dans la présente description, on utilisera l'index i pour se référer à l'index de la valeur du cryptogramme actuellement affiché tout en conservant à l'esprit que ladite valeur est en pratique être contenue dans la variable CV mise à jour au cours de la mise en oeuvre du procédé selon l'invention.

Comme cela va maintenant être détaillé, les périodes de temps successives T1, .., Tn associées aux opérations d'affichage successives de la pluralité d'opérations d'affichage peuvent former une série non-constante calculable.

Par « série non-constante », on entend notamment qu'au moins deux périodes de temps Ti, Tj, parmi la pluralité de périodes de temps successives T1, ..., Tn, présentent des durées différentes l'une de l'autre. En d'autres termes, on entend que le basculement du dispositif d'affichage 10 n'est pas périodique dans le temps.

Avantageusement, une majorité des périodes de temps successives T1, ..., Tn, peuvent être distinctes les unes des autres, voire toutes les périodes de temps successives T1, ..., Tn, peuvent être différentes les unes de autres, aucune période de temps T1, ..., Tn ne présentant la même durée qu'une autre période de temps T1, ..., Tn.

Par « série calculable», on entend notamment que la suite des périodes de temps successives T1, ..., Tn est prédictible et peut être calculée à partir d'un ensemble de données prédéfini et connu, par exemple du fabriquant de la carte de paiement.

En particulier, il n'est ainsi possible pour le serveur 2 de vérification de carte de vérifier la valeur actuellement affichée sur le cryptogramme sans avoir besoin d'échanger des informations de synchronisation avec la carte de paiement 1.

Ledit ensemble de données prédéfini et connu peut notamment comporter le numéro de compte primaire PAN, la date d'expiration de la carte de paiement et/ou l'identité du titulaire de la carte de paiement mais également des valeurs graines pour un algorithme de calcul de valeurs de cryptogramme comme cela va maintenant être détaillé dans un mode particulier de réalisation d'un procédé selon l'invention.

Ainsi par exemple, on peut déterminer une variation TVARi associée à une période de temps Ti, par exemple de la manière suivante, en fonction du compteur de valeurs du cryptogramme affichées CV, qui vaut dans cette exemple i, et d'une plage de variabilité unique associée à la carte de paiement PVAR:

$$TVAR_i = i^2 \bmod PVAR$$

Une valeur de seuil de basculement VSi associée à une période de temps Ti peut alors être déterminée en fonction de la variation TVARi associée à la période de temps Ti ainsi que d'une valeur moyenne de période de temps entre deux basculements VSm et d'une valeur temporelle de début de fonctionnement de la carte T0, par exemple comme :

$$VS_i = T0 + i * VSm + TVAR_i$$

De cette manière, la valeur de seuil de basculement VSi associée à la période de temps Ti est déterminée et calculable sans synchronisation par la carte et le serveur.

Avantageusement, la variation entre les valeurs successives de seuil de basculement VSi est elle-même non périodique, c'est-à-dire que la variation de durée de la suite des périodes de temps successives T1, ..., Tn est non périodique et donc non aisément prédictible.

On remarquera que ceci va au-delà de la simple non périodicité des instants de basculement du dispositif d'affichage 10, puisque c'est alors l'absence de périodicité (c'est-à-dire la variation entre les périodes de temps Ti, Ti+1 successives) qui est elle-même non périodique.

Dans ce mode de réalisation particulier, les valeurs graines sont ainsi notamment la valeur moyenne de période de temps entre deux basculements VSm, la plage de variabilité unique associée à la carte de paiement PVAR et la valeur temporelle de début de fonctionnement de la carte T0.

On comprend donc que ces valeurs graines peuvent aisément être partagées entre la carte de paiement 1 et le serveur 2 de vérification de carte, par exemple lors de, ou juste après, la fabrication de la carte de paiement 1.

En outre, la série des valeurs de seuil de basculement VSi associée à une période de temps Ti est alors une série non-constante calculable. Par conséquent, la série des périodes de temps successives Ti, associées aux opérations d'affichage successives i de la pluralité d'opérations d'affichage forment également une série non-constante calculable.

Les différentes valeurs graines sont sélectionnées pour assurer une variabilité suffisante à la série des périodes de temps successives Ti pour réduire le risque de fraude, tout en conservant une utilisation aisée par l'opérateur, c'est-à-dire en garantissant un temps d'affichage suffisant de chaque valeur du cryptogramme pour permettre une lecture et une saisie à une vitesse normale par l'utilisateur.

On comprend bien évidemment que les équations ci-avant, permettant de déterminer la valeur de seuil de basculement VSi associée à une période de temps Ti, sont fournies uniquement à titre d'exemple non limitatif.

Ainsi on peut envisager de modifier la forme exacte de ces équations et utiliser des valeurs graines additionnelles telles qu'un pas de temps définis par exemple, de sorte à assurer un temps minimal d'affichage de chaque valeur du cryptogramme.

Bien entendu, la présente invention ne se limite pas aux formes de réalisation décrites ci-avant à titre d'exemples ; elle s'étend à d'autres variantes.

D'autres réalisations sont possibles.

## Revendications

1. Procédé de génération et d'affichage d'un cryptogramme pour une carte de paiement (1) comportant un dispositif d'affichage (10) disposé sur une face (1a) de la carte de paiement, le dispositif d'affichage comprenant un champ (10a) pour l'affichage d'un cryptogramme pour des opérations de vérification de carte réalisées par un serveur (2) de vérification de carte, le procédé comportant les opérations de :

   - afficher (200), dans le champ du dispositif d'affichage, une première valeur du cryptogramme (C1) pendant une première période de temps (T1),
   - afficher, dans le champ du dispositif d'affichage, une deuxième valeur du cryptogramme (C2) pendant une deuxième période de temps (T2) suivant la première période de temps,

   le procédé étant **caractérisé en ce que** les première et deuxième périodes de temps ont des durées différentes.

2. Procédé selon la revendication 1, dans lequel une opération de basculement (300) la première période de temps (T1) à la deuxième période de temps (T2) est réalisée lorsqu'un compteur temporel (CT) dépasse une première valeur de seuil de basculement (VS1) associée à la première période de temps (T1), le compteur temporel étant incrémenté par une horloge interne (14) de la carte de paiement (1) non-synchronisée avec le serveur (2) de vérification de carte.

3. Procédé selon la revendication 2, dans lequel l'opération de basculement (300) de la première période de temps (T1) à la deuxième période de temps (T2) comporte les étapes de :

   - incrémenter (330) un compteur de valeurs du cryptogramme affichées (CV),
   - déterminer (340) la deuxième valeur du cryptogramme (C2) afficher pendant la deuxième période de temps (T2) en fonction, au moins, d'une clé numérique unique (M) associée à la carte de paiement (1) et du compteur de valeurs du cryptogramme affichées (CV),
   - mettre à jour (350) le dispositif d'affichage (10) de la carte pour afficher la deuxième valeur du cryptogramme (C2), et
   - déterminer (360) une deuxième valeur de seuil de basculement (VS2) associée à la deuxième période de temps, en fonction au moins du compteur de valeurs du cryptogramme affichées (CV).

4. Procédé selon l'une quelconque des revendications 1 à 3, dans lequel les valeurs du cryptogramme (C1, C2) affichées dans le champ (10a) du dispositif d'affichage (10) ne comportent pas de données de synchronisation pour le serveur (2) de vérification de carte.

5. Procédé selon l'une quelconque des revendications 1 à 4, comportant une pluralité de n opérations d'affichage (200) successives, chaque opération d'affichage i, parmi la pluralité de n opérations d'affichage, comportant l'affichage, dans le champ (10a) du dispositif d'affichage (10), d'une valeur du cryptogramme (Ci) associée à ladite opération d'affichage pendant une période de temps (Ti) associée à ladite opération d'affichage, et dans lequel les périodes de temps (Ti) successives associées aux opérations d'affichage successives de la pluralité de n opérations d'affichage forment une série non-constante calculable.

6. Procédé selon l'une quelconque des revendications 1 à 5, dans lequel une valeur de seuil de basculement (VSi) associée à une période de temps (Ti) est déterminée en fonction du compteur de valeurs du cryptogramme affichées (CV), d'une valeur moyenne de période de temps entre deux basculements (VSm), d'une plage de variabilité unique associée à la carte de paiement (PVAR) et d'une valeur temporelle de début de fonctionnement de la carte (T0).

7. Carte de paiement (1) comportant

   - un dispositif d'affichage (10) disposé sur une face (1a) de la carte de paiement comprenant un champ (10a) pour l'affichage d'un cryptogramme pour des opérations de vérification de carte réalisées par un serveur (2) de vérification de carte, et
   - un circuit de commande (11) agencé pour commander l'affichage, dans ledit champ du dispositif d'affichage, au moins d'une première valeur du cryptogramme (C1) pendant une première période de temps (T1) et d'une deuxième valeur du cryptogramme (C2) pendant une deuxième période de temps (T2) suivant la première période de temps,

   **caractérisé en ce que** les première et deuxième périodes de temps ont des durées différentes.

8. Carte de paiement (1) selon la revendication 7, dans laquelle le circuit de commande (11) comporte :

   * une mémoire (13) pour contenir un compteur temporel (CT) et au moins une valeur de seuil de basculement (VSi),
   * une horloge interne (14) non-synchronisée avec l'extérieur de la carte, pour incrémenter le compteur temporel, et

\* un circuit de traitement (15) pour basculer de la première période de temps (T1) à la deuxième période de temps (T2) lorsque le compteur temporel dépasse une première valeur de seuil de basculement (VS1) associée à la première période de temps (T1).

**9.** Carte de paiement (1) selon la revendication 8, comportant en outre un numéro de compte primaire PAN inscrit sur une face (1b) de la carte de paiement.

**10.** Programme d'ordinateur pour une carte de paiement (1), le programme comprenant des instructions pour mettre en oeuvre les étapes d'un procédé de génération et d'affichage d'un cryptogramme pour des opérations de vérification de carte selon l'une des revendications 1 à 6.

**Patentansprüche**

**1.** Verfahren zur Erzeugung und zur Anzeige eines Kryptogramms für eine Zahlungskarte (1), die eine auf einer Seite (1a) der Zahlungskarte der angeordnete Anzeigevorrichtung (10) einschließt, wobei die Anzeigevorrichtung ein Feld (10a) zur Anzeige eines Kryptogramms für Kartenprüfvorgänge, die durch einen Kartenprüfserver (2) ausgeführt werden, umfasst, wobei das Verfahren folgende Vorgänge einschließt:

- Anzeigen (200) eines ersten Kryptogrammwerts (C1) im Feld der Anzeigevorrichtung während eines ersten Zeitraums (T1),
- Anzeigen eines zweiten Kryptogrammwerts (C2) im Feld der Anzeigevorrichtung während eines auf den ersten Zeitraum folgenden zweiten Zeitraums (T2),

wobei das Verfahren **dadurch gekennzeichnet ist, dass** der erste und der zweite Zeitraum von unterschiedlicher Dauer sind.

**2.** Verfahren nach Anspruch 1, wobei ein Umschaltvorgang (300) vom ersten Zeitraum (T1) auf den zweiten Zeitraum (T2) ausgeführt wird, wenn ein Zeitzähler (CT) einen dem ersten Zeitraum (T1) zugeordneten ersten Umschaltschwellenwert (VS1) überschreitet, wobei der Zeitzähler durch eine interne Uhr (14) der Zahlungskarte (1), die mit dem Kartenprüfserver (2) nicht synchronisiert ist, inkrementiert wird.

**3.** Verfahren nach Anspruch 2, wobei der Umschaltvorgang (300) vom ersten Zeitraum (T1) auf den zweiten Zeitraum (T2) folgende Schritte einschließt:

- Inkrementieren (330) eines Zählers angezeigter Kryptogrammwerte (CV),
- Bestimmen (340) des während des zweiten Zeitraums (T2) anzuzeigenden zweiten Kryptogrammwerts (C2) entsprechend zumindest einem der Zahlungskarte (1) zugeordneten einmaligen digitalen Schlüssels (M) und dem Zähler angezeigter Kryptogrammwerte (CV),
- Aktualisieren (350) der Anzeigevorrichtung (10) der Karte, um den zweiten Kryptogrammwerts (C2) anzuzeigen, und
- Bestimmen (360) eines dem zweiten Zeitraum zugeordneten Umschaltschwellenwerts (VS2) entsprechend zumindest dem Zähler angezeigter Kryptogrammwerte (CV).

**4.** Verfahren nach einem der Ansprüche 1 bis 3, wobei die im Feld (10a) der Anzeigevorrichtung (10) angezeigten Kryptogrammwerte (C1, C2) keine Synchronisierungsdaten für den Kartenprüfserver (2) einschließen.

**5.** Verfahren nach einem der Ansprüche 1 bis 4, einschließlich einer Mehrzahl von n aufeinanderfolgenden Anzeigevorgängen (200), wobei jeder Anzeigevorgang i aus der Mehrzahl von n Anzeigevorgängen die Anzeige eines dem Anzeigevorgang zugeordneten Kryptogrammwerts (Ci) im Feld (10a) der Anzeigevorrichtung (10) während eines dem Anzeigevorgang zugeordneten Zeitraums (Ti) einschließt, und wobei die aufeinanderfolgenden Zeiträume (Ti), die den aufeinanderfolgenden Anzeigevorgängen der Mehrzahl von n Anzeigevorgängen zugeordnet sind, eine berechenbare nichtkonstante Reihe ausbilden.

**6.** Verfahren nach einem der Ansprüche 1 bis 5, wobei ein Umschaltschwellenwert (VSi), der einem Zeitraum (Ti) zugeordnet ist, entsprechend dem Zähler angezeigter Kryptogrammwerte (CV), einem Mittelwert des Zeitraums zwischen zwei Umschaltvorgängen (VSm), einem der Zahlungskarte zugeordneten einmaligen Variabilitätsbereich (PVAR) und einem Zeitwert des Funktionsbeginns der Karte (T0) bestimmt wird.

**7.** Zahlungskarte (1), einschließlich

- einer Anzeigevorrichtung (10), die auf einer Seite (1a) der Zahlungskarte angeordnet ist und ein Feld (10a) zur Anzeige eines Kryptogramms für Kartenprüfvorgänge, die durch einen Kartenprüfserver (2) ausgeführt werden, umfasst, und
- einer Steuerschaltung (11), die dazu eingerichtet ist, die Anzeige zumindest eines ersten Kryptogrammwerts (C1) während eines ersten Zeitraums (T1) und eines zweiten Kryptogrammwerts (C2) während eines auf den ersten Zeitraum folgenden zweiten Zeitraums (T2) in dem Feld der Anzeigevorrichtung zu steuern,

**dadurch gekennzeichnet ist, dass** der erste und der zweite Zeiträume von unterschiedlicher Dauer sind.

8. Zahlungskarte (1) nach Anspruch 7, wobei die Steuerschaltung (11) Folgendes einschließt:

* einen Speicher (13) zum Aufnehmen eines Zeitzählers (CT) und zumindest eines Umschaltschwellenwerts (VSi),
* eine mit dem Äußeren der Karte nicht synchronisierte interne Uhr (14) zum Inkrementieren des Zeitzählers und
* eine Verarbeitungsschaltung (15) zum Umschalten vom ersten Zeitraum (T1) auf den zweiten Zeitraum (T2), wenn der Zeitzähler einen dem ersten Zeitraum (T1) zugeordneten ersten Umschaltschwellenwert (VS1) überschreitet.

9. Zahlungskarte (1) nach Anspruch 8, einschließlich ferner einer auf einer Seite (1b) der Zahlungskarte eingetragenen Primärkontonummer PAN.

10. Computerprogramm für eine Zahlungskarte (1), wobei das Programm Anweisungen zum Ausführen der Schritte eines Verfahrens zur Erzeugung und zur Anzeige eines Kryptogramms für Kartenprüfvorgänge nach einem der Ansprüche 1 bis 6 umfasst.

**Claims**

1. Method for generating and displaying a security code for a payment card (1) comprising a display device (10) arranged on a face (1a) of the payment card, the display device comprising a field (10a) for displaying a security code for card verification operations performed by a card verification server (2), the method comprising the steps of:

- displaying (200), in the field of the display device, a first value of the security code (C1) during a first time period (T1),
- displaying, in the field of the display device, a second value of the security code (C2) during a second time period (T2) that follows the first time period,

the method being **characterized in that** the first and second time periods are of different durations.

2. Method according to claim 1, wherein a switchover operation (300) from the first time period (T1) to the second time period (T2) is carried out when a time counter (CT) exceeds a first switching threshold value (VS1) associated with the first time period (T1), the time counter being incremented by an internal clock (14) of the payment card (1) that is not synchronized with the card verification server (2).

3. Method according to claim 2, wherein the switchover operation (300) from the first time period (T1) to the second time period (T2) comprises the steps of:

- incrementing (330) a counter of displayed values of the security code (CV),
- determining (340) the second value of the security code (C2) to be displayed during the second time period (T2) based at least on a unique numeric key (M) associated with the payment card (1) and on the counter of displayed values of the security code (CV),
- updating (350) the display device (10) of the card to display the second value of the security code (C2), and
- determining (360) a second switching threshold value (VS2) associated with the second time period, based on at least the counter of displayed values of the security code (CV).

4. Method according to any one of claims 1 to 3, wherein the values of the security code (C1, C2) displayed in the field (10a) of the display device (10) do not contain synchronization data for the card verification server (2).

5. Method according to any one of claims 1 to 4, comprising a plurality of n successive display operations (200),
each display operation i, among of the plurality of n display operations, including the display, in the field (10a) of the display device (10), of a value of the security code (Ci) associated with said display operation during a time period (Ti) associated with said display operation,
and wherein the successive time periods (Ti) associated with the successive display operations among the plurality of n display operations form a calculable non-constant series.

6. Method according to any one of claims 1 to 5, wherein a switching threshold value (VSi) associated with a time period (Ti) is determined based on the counter of displayed values of the security code (CV), on an average value of the time period between two switchovers (MSM), on a unique variability range associated with the payment card (PVAR), and on a temporal value for the start of operation of the card (T0).

7. Payment card (1) comprising

- a display device (10) arranged on a face (1a) of the payment card, comprising a field (10a) for displaying a security code for card verification operations performed by a card verification server (2), and

- a control circuit (11) arranged to control the displaying, in said field of the display device, at least of a first value of the security code (C1) during a first time period (T1) and of a second value of the security code (C2) during a second time period (T2) that follows the first time period,

**characterized in that** the first and second time periods are of different durations.

8. Payment card (1) according to claim 7, wherein the control circuit (11) comprises:

    * a memory (13) for storing a time counter (CT) and at least one switching threshold value (VSi),
    * an internal clock (14) that is not synchronized with outside the card, for incrementing the time counter, and
    * a processing circuit (15) for switching from the first time period (T1) to the second time period (T2) when the time counter exceeds a first switching threshold value (VS1) associated with the first time period (T1).

9. Payment card (1) according to claim 8, further comprising a primary account number PAN written on a face (1b) of the payment card.

10. Computer program for a payment card (1), said program comprising instructions for carrying out the steps of a method for generating and displaying a security code for card verification operations according to one of claims 1 to 6.

1b 1a

1

395

10 C 10a 11

12

U

DC

4

RCPT

3

SRVR

2

1234 1234 1234 1234

A. SMITH

01/15

ID

# FIG. 1

11 14 13

CLCK

CT, CV

VS1, VS2

C1, C2

10a 10

PROC

COM

15 16

# FIG. 2

FOR i=1..n — 100

DISP Ci FOR Ti — 200

SWTCH DISP — 300

END FOR — 400

# FIG. 3

INC CT — 310

CT > VSi — 320

INC CV — 330

CALC Ci+1 — 340

UPDT DISP — 350

CALC VSi+1 — 360

300 {

# FIG. 4

**RÉFÉRENCES CITÉES DANS LA DESCRIPTION**

**Documents brevets cités dans la description**

- US 7954705 B
- US 2007136211 A1
- US 2003105964 A1